# EUROPEAN PATENT SPECIFICATION

(11) **EP 2 556 239 B1**
(45) Date of publication and mention of the grant of the patent: **16.08.2017**
(21) Application number: 10731449.4
(22) Date of filing: 18.06.2010
(51) Int. Cl.: F02M 26/00

(54) **BYPASS VALVE FOR VEHICLE**
BYPASSVENTIL FÜR EIN FAHRZEUG
SOUPAPE DE DÉRIVATION POUR UN VÉHICULE

(30) Priority: 12.04.2010 KR 20100033557
(43) Date of publication of application: 13.02.2013
(73) Proprietor: Unick Corporation, Busan 602-819 (KR)
(72) Inventor: LEE, Chang Hoon, Busan 604-080 (KR); MOON, Kuk Chan, Busan 602-090 (KR); KIM, Seong Jun, Gimhae-si Gyeongsangnam-do 621-728 (KR); KIM, Yun Su, Busan 616-759 (KR); LEE, Kyung Min, Busan 612-061 (KR); LEE, Ji Yong, Gimhae-si Gyeongsangnam-do 621-767 (KR)
(74) Representative: Franke, Dirk
(86) International application number: PCT/KR2010/003980
(87) International publication number: WO 2011/129485

(56) References cited:
- EP-A1- 2 020 544
- EP-A1- 2 025 910
- WO-A1-2009/044947
- DE-A1-102005 044 088
- JP-A- H07 310 607
- JP-A- 2004 116 380
- JP-A- 2004 190 693
- JP-A- 2006 037 773
- JP-A- 2007 155 029
- JP-A- 2009 228 539
- KR-B1- 100 906 381

## Description

### Technical Field

The present invention relates to a bypass valve for a vehicle, and more particularly to a bypass valve for a vehicle with excellent durability, which can be easily manufactured with a simple structure, which can allow a flap for selectively discharging exhaust gas to smoothly work, and which does not cause an erroneous operation or a deformation in a long-term use.

### Background Art

In general, exhaust gas which is produced at the time of combusting mixture gas and is discharged to the outside via an exhaust pipe contains noxious substances such as carbon monoxide (CO), nitrogen oxide (NOₓ), non-combusted hydrocarbon (HC).

The nitrogen oxide as the noxious substance contained in the exhaust gas is inversely proportional to the carbon monoxide and the hydrocarbon. That is, at the time point when fuel is completely combusted and the carbon monoxide and the hydrocarbon are least discharged, the nitrogen oxide is most produced.

Therefore, since an allowable amount of contaminants containing the nitrogen oxide is regulated with the related laws, various techniques for reducing the contaminants in the exhaust gas. One of them is an exhaust gas recirculation (EGR) system.

In the EGR system, a part of exhaust gas is recirculated to minimize the decrease in power, and the highest combustion temperature is lowered to reduce the amount of nitrogen oxide. More specifically, when exhaust gas containing carbon dioxide (CO₂) having a greater thermal capacity than that of nitrogen (N₂) is mixed into the mixture gas at an appropriate ratio, the highest combustion temperature of an engine can be lowered, thereby reducing the amount of nitrogen oxide.

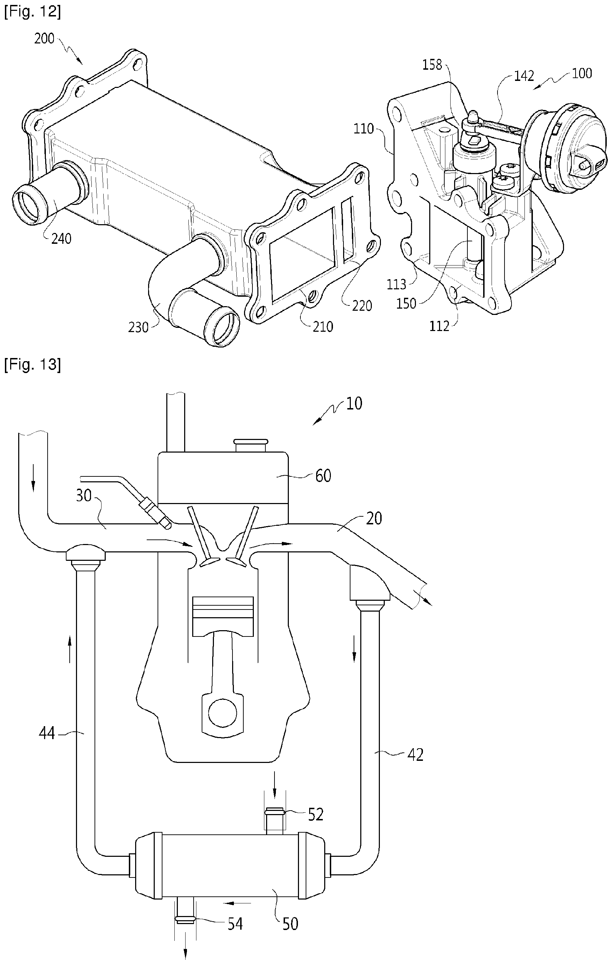

FIG. 13 is a diagram schematically illustrating the configuration of a known exhaust gas recirculation system. The exhaust gas recirculation system is described as follows with reference to FIG. 13.

The exhaust gas recirculation system 10 includes recirculation pipes 42 and 44 for recirculating a part of exhaust gas discharged from an exhaust manifold 20 to an intake manifold 30 and an EGR cooler assembly 50 disposed in the recirculation pipes 42 and 44 so as to cool the recirculated exhaust gas.

The recirculation pipes 42 and 44 include an inlet pipe 42 connected to an end of the EGR cooler assembly 50 so as to receive high-temperature exhaust gas and an outlet pipe 44 connected to the other end of the EGR cooler assembly 50 so as to discharge the exhaust gas cooled by the EGR cooler assembly 50. An EGR valve for recirculating the exhaust gas and a bypass valve selectively receiving the exhaust gas introduced via the inlet pipe 42 are disposed in the inlet pipe 42.

The EGR cooler assembly 50 is a heat exchanger of a shell and tube type, and cools the high-temperature exhaust gas introduced via the inlet pipe 42 using a coolant of an engine 60. Accordingly, an introduction pipe 52 for introducing the coolant and a discharge pipe 54 for discharging the coolant are disposed in the EGR cooler assembly 50.

However, the bypass valve applied to the known exhaust gas recirculation system 10 has a complicated structure, which makes it difficult to manufacture it and requires a great manufacturing cost. In addition, there is a problem in that the flap selectively discharging the exhaust gas and related components for operating the flap markedly deteriorate in durability in a long-term use.

The German patent application DE 10 2005 044088 A1 discloses a device for controlling an exhaust gas stream, in particular of an internal combustion engine in a passenger vehicle. The device comprises a housing having a first displaceable actuating element supported on the housing. The exhaust gas stream can be selectively guided into a first exhaust gas conduit and/or a second exhaust gas conduit by the displacement of the first actuating element. Additionally, a second actuating element is provided on the housing, in order to control a variable of the exhaust gas stream.

### Disclosure of Invention

### Technical Problem

The invention is made to solve the above-mentioned problems. A goal of the invention is to provide a bypass valve for a vehicle with excellent durability, which can be easily manufactured with a simple structure, which can allow a flap for selectively discharging exhaust gas to smoothly work, and which does not cause an erroneous operation or a deformation in a long-term use.

### Solution to Problem

According to an aspect of the invention, there is provided a bypass valve for a vehicle, including: an intake port formed in a surface of a valve housing; a first exhaust port formed in another surface of the valve housing and connected to a cooling flow channel of an EGR cooler; a second exhaust port formed to be adjacent to the first exhaust port and connected to a bypass flow channel of the EGR cooler; a gas transfer channel formed in the valve housing and having a junction section formed in the middle so as to connect the intake port and the first and second exhaust ports; a housing cover coupled to an opened side of the junction section; a shaft of which both ends are coupled to the valve housing and the housing cover and which is rotatably disposed in the junction section; a flap coupled to the middle of the shaft so as to selectively open and close the first and second exhaust ports; and a driving mechanism disposed on one side of the valve housing so as to cause the flap to swing.

### Advantageous Effects of Invention

According to the above-mentioned configuration, since the flap swings in the range of 60° to 70° to selectively open and close the first and second exhaust ports, 60° to 70°, the flap can swing with only a part of the negative pressure of an engine. Accordingly, it is possible to conveniently distribute the negative pressure of the engine used in intake of external air and supply of fuel.

Since the dry bearing and the carbon bush are coupled to both ends of the shaft having the flap disposed therein, the flap and the driving mechanism causing the flap to swing can smoothly work. Accordingly, the erroneous operation or the deformation is not caused even in a long-term use, thereby improving the durability.

### Brief Description of Drawings

FIGS. 1 and 2 are diagrams illustrating a bypass valve for a vehicle according to an embodiment of the invention.
FIG. 3 is a diagram illustrating the internal configuration of the bypass valve for a vehicle according to the embodiment of the invention.
FIGS. 4 and 5 are diagrams illustrating a process of discharging exhaust gas based on the operation of the flap in the bypass valve for a vehicle according to the embodiment of the invention.
FIGS. 6 and 7 are a perspective view and an exploded perspective view illustrating the top side of the bypass valve for a vehicle according to the embodiment of the invention.
FIG. 8 is an exploded view illustrating the bottom side of the bypass valve for a vehicle according to the embodiment of the invention.
FIGS. 9 and 10 are partially enlarged views of FIG. 8.
FIGS. 11 and 12 are diagrams illustrating a state where an EGR cooler is coupled to and decoupled from the bypass valve for a vehicle according to the embodiment of the invention.
FIG. 13 is a diagram schematically illustrating a known exhaust gas recirculation system.

### Mode for the Invention

Hereinafter, exemplary embodiments of the invention will be described in detail with reference to the accompanying drawings. In describing the exemplary embodiments of the invention, like elements in different drawings are referenced by like reference numerals.

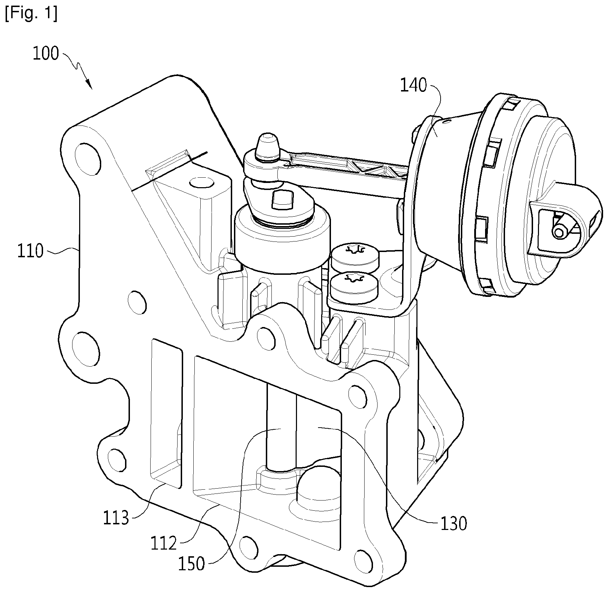

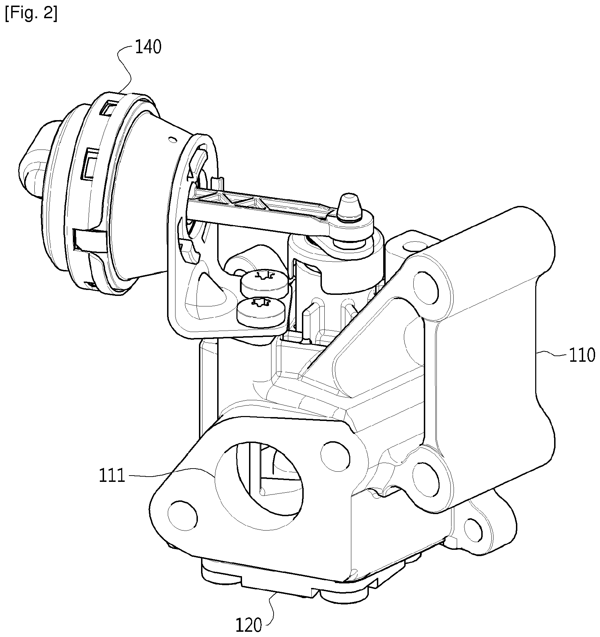

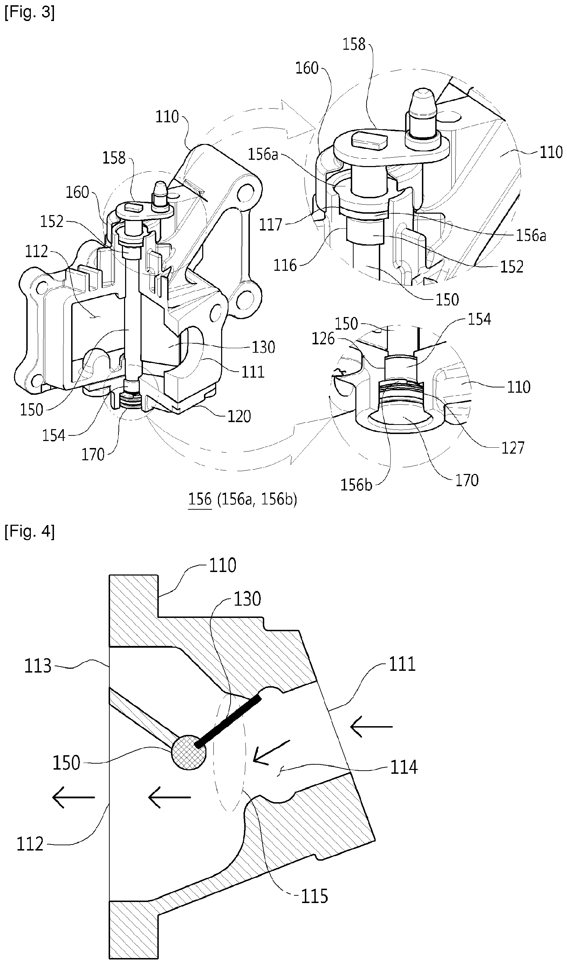

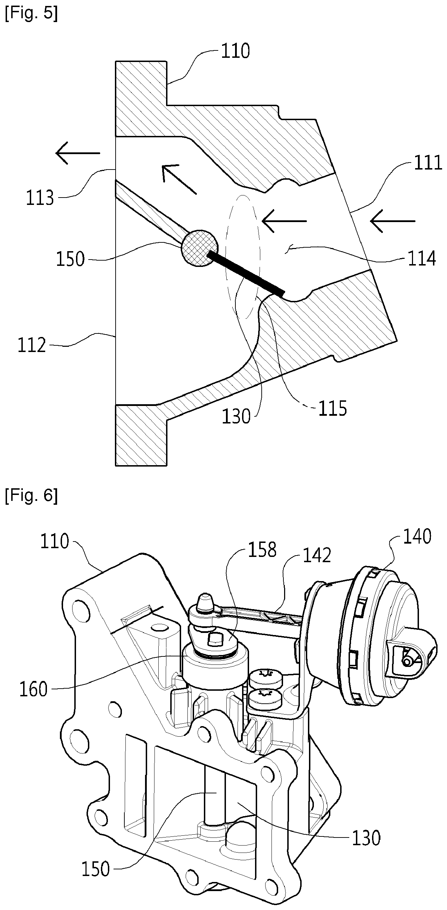

FIGS. 1 and 2 are diagrams illustrating a bypass valve for a vehicle according to an embodiment of the invention. FIG. 3 is a diagram illustrating the internal configuration of the bypass valve for a vehicle according to the embodiment of the invention. FIGS. 4 and 5 are diagrams illustrating a process of discharging exhaust gas based on the operation of the flap in the bypass valve for a vehicle according to the embodiment of the invention.

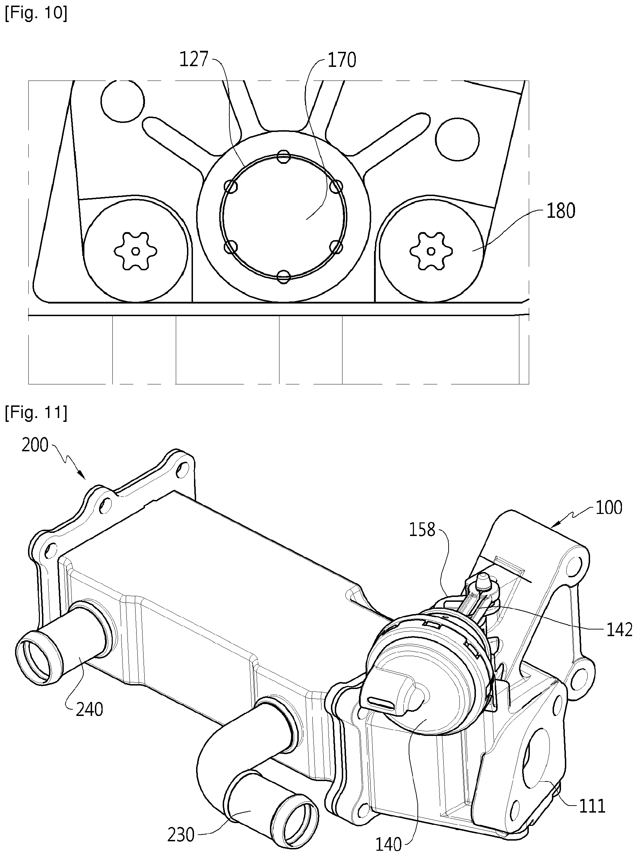

A bypass valve for a vehicle 100 according to an embodiment of the inventionis coupled to an EGR cooler 200 (see FIGS. 11 and 12) and serves to selectively discharge exhaust gas produced from an engine (not shown) to a cooling flow channel 210 of the EGR cooler 200 or a bypass flow channel 220.

The configuration of the bypass valve for a vehicle 100 according to the embodiment of the invention will be described with reference to FIGS. 1 to 5. The bypass valve for a vehicle 100 includes a valve housing 110, a housing cover 120 coupled to the valve housing 110, a flap 130 disposed inside the valve housing 110, and a driving mechanism 140 disposed outside the valve housing 110 so as to cause the flap 130 to swing.

An intake port 111 connected to an exhaust manifold (not shown) of an engine (not shown) so as to receive the exhaust gas is formed in one surface of the valve housing 110. Exhaust ports 112 and 113 connected to the EGR cooler 200 (see FIGS. 11 and 12) so as to discharge the exhaustgas are formed in another surface. A gas transfer channel 114 connecting the intake port 111 and the exhaust ports 112 and 113 is formed inside the valve housing 110.

The exhaust ports 112 and 113 for discharging the exhaust gas includes a first exhaust port 112 for discharging the exhaust gas introduced from the intake port 111 to the cooling flow channel 210 (see FIG. 12) of the EGR cooler 200 (see FIGS. 11 and 12) and a second exhaust port 113 for discharging the introduced exhaustgas to the bypass flow channel 220 of the EGR cooler 200. A junction section 115 is formed in the middle of the gas transfer channel 114 connecting the intake port 111 and the first and second exhaust ports 112 and 113, and the flap 130 for selectively discharging the exhaust gas introduced from the intake port 111 to one of the first and second exhaust ports 112 and 113 is disposed in the junction section 115.

A process of discharging the exhaust gas based on the operation of the flap 130 will be described with reference to FIGS. 4 and 5.

The gas transfer channel 114 has a Y shape so as to connect the intake port 111 and the first and second exhaust ports 112 and 113. The junction section 115 is formed in the middle of the gas transfer channel 114. The flap 130 is disposed in the junction section 115 so as to swing.

As shown in FIG. 4, when the flap 130 swings to close the second exhaust port 113, the exhaust gas introduced from the intake port 111 is discharged via the opened first exhaust port 112 to the cooling flow channel 210 (see FIG. 12) of the EGR cooler 200 (see FIG. 12). On the other hand, as shown in FIG. 5, when the flap 130 swings to close the first exhaust port 112, the introduced exhaust gas is discharged via the opened second exhaust port 113 to the bypass flow channel 220 (see FIG. 12) of the EGR cooler 200. That is, the exhaust gas is discharged to the cooling flow channel 210 or the bypass flow channel 220 of the EGR cooler 200 depending on the temperature, whereby the temperature of the exhaust gas recirculated to an intake manifold can be kept constant always.

At this time, the swing angle of the flap 130 selectively opening and closing the first and second exhaust ports 112 and 113 is in the range of 60° to 70°. In this way, when the swing angle of the flap 130 is designed to the range of 60° to 70°, the motion resistance is smaller than that of the known flap swinging in the range of 80° to 90° and thus the flap 130 can swing with only a part of the negative pressure of the engine (the vacuum pressure generated in the engine). Accordingly, it is possible to conveniently distribute the negative pressure of the engine used in intake of external air and supply of fuel and to allow the flap 130 and the driving mechanism 140 for swinging the flap 130 to smoothly work. In addition, since the motion of the driving mechanism 140 is minimized, the erroneous operation or the deformation is not caused even in a long-term use, thereby improving the durability.

On the other hand, the flap 130 is swingably disposed in the junction section 115, is coupled to the shaft 150, and serves to selectively open and close the first and second exhaust ports 112 and 113 at the time of the rotation of the shaft 150 by the driving mechanism 140 (see FIG. 1).

As shown in FIG. 3, the shaft 150 has a rod shape with a predetermined length, and a carbon bush 152 and a dry bearing 154 are coupled to the upper end and the lower end thereof, respectively. Stopper rings 156 for preventing the separation of the carbon bush 152 and the dry bearing 154 are coupled to the outsides of the carbon bush 152 and the dry bearing 154.

The carbon bush 152 and the dry bearing 154 can endure the high-temperature exhaust gas and prevent the deformation of the shaft 150 even in a long-term use, thereby causing the flap 130 to smoothly swing. It is preferable that the use temperature of the carbon bush 152 is in the range of 400°C to 500°C and the use temperature of the dry bearing 154 is in the range of 500°C to 600°C.

In this embodiment, the structure is exemplified in which the carbon bush 152 is coupled to the upper end of the shaft 150 and the dry bearing 154 is coupled to the lower end thereof, but the invention is not limited to this structure. For example, the carbon bush 152 or the dry bearing 154 may be coupled to both ends of the shaft 150.

On the other hand, insertion grooves 116 and 126 into which the carbon bush 152 and the dry bearing 154 are inserted are formed in the valve housing 110 and the housing cover 120, respectively. The stopper rings 156 of the carbon bush 152 and the dry bearing 154 inserted into the insertion grooves 116 and 126 may be a doughnut-shaped plug 156a or a C-shaped snap ring 156b, as shown in FIG. 3.

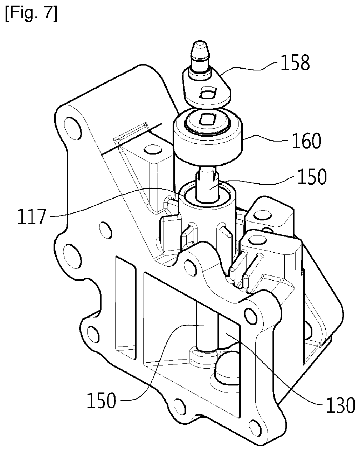

FIGS. 6 and 7 are a perspective view and an exploded perspective view illustrating the top side of the bypass valve for a vehicle according to the embodiment of the invention.

Referring to FIGS. 3, 6, and 7, a through hole 117 is formed in the top surface of the valve housing 110. A part of the top end of the shaft 150 is exposed to the outside of the valve housing 110 via the through hole 117. A rotation plate 158 is coupled to the top end of the shaft 150 exposed to the outside. The rotation plate 158 is connected to the driving mechanism 140 via a tappet 142.

Here, a dust cap 160 is disposed in the through hole 117 coupled to the top end of the shaft 150. The dust cap 160 serves to prevent the external leakage of the exhaust gas leaking between the shaft 150 and the carbon bush 152 and between the carbon bush 152 and the insertion groove 116 of the valve housing 110. That is, the leakage of the exhaust gas is prevented by sealing the through hole 117, thereby preventing the periphery of the bypass valve for a vehicle 100 from being contaminated due to the exhaust gas.

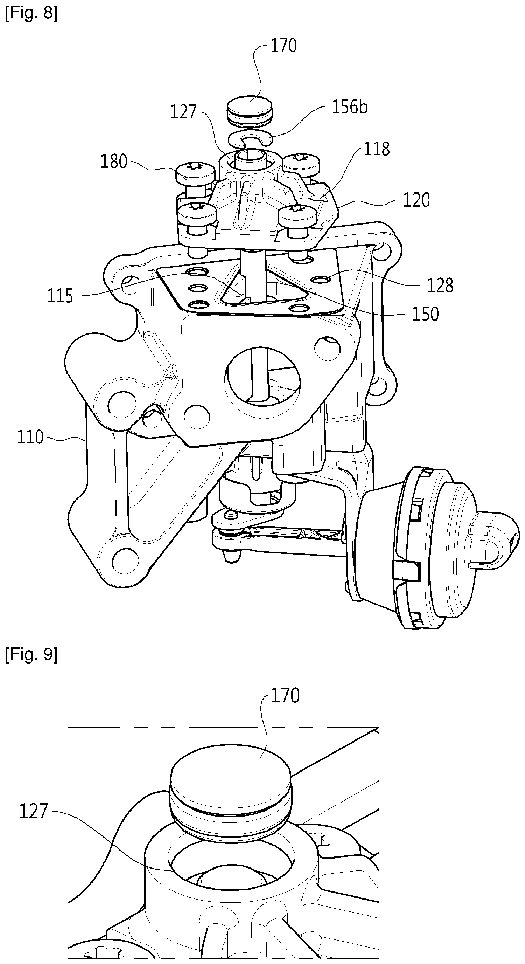

FIG. 8 is an exploded view illustrating the bottom side of the bypass valve for a vehicle according to the embodiment of the invention. FIGS. 9 and 10 are partially enlarged views of FIG. 8. In FIGS. 8 to 10, the upside and the downside are inverted so as to view the bottom of the bypass valve for a vehicle.

Referring to FIG. 3 and FIGS. 8 to 10, the junction section 115 of the gas transfer channel 114 is opened from the bottom of the valve housing 110 and the housing cover 120 is coupled to the opened part of the junction section 115.

An insertion hole 127 into which the lower end of the shaft 150 is inserted is formed at the center of the housing cover 120 and an insertion groove 126 into which the dry bearing 154 is inserted is formed above the insertion hole 127 (see FIG. 3). A locking cap 170 for preventing the separation of the shaft 150 is disposed in the insertion hole 127.

The housing cover 120 is fixed to the valve housing 110 with a fixing screw 180 so as to prevent the valve housing 110, the housing cover 120, the shaft 150, and the flap 130 from be deformed due the welding heat at the time of attachment thereof using a known welding method. In this case, when a screw fixing agent is applied to the fixing screw 180, the screw fixing agent is cured to enhance the removal torque of the fixing screw.

On the other hand, positioning holes 118 and 128 are formed in the coupling surfaces of the valve housing 110 and the housing cover 120. The positioning holes 118 and 128 allow the housing cover 120 to be coupled to a correct position without any warp of the shaft 150, thereby preventing the axial twist of the shaft 150 at the time of rotation thereof.

In this embodiment, the positioning holes 118 and 128 are formed in the coupling surfaces of the valve housing 110 and the housing cover 120, but positioning pins (not shown) inserted into the positioning holes 118 and 128 may be formed in one of the coupling surfaces of the valve housing 110 and the housing cover 120.

The locking cap 170 for preventing the separation of the shaft 150 is fixed by punching in a state where it is inserted into the insertion hole 127. As shown in FIG. 10, when the punching points are set radially around the locking cap 170, it is possible to effectively prevent the separation of the locking cap 170 and the shaft 150.

Here, it is preferable that the locking cap 170 is formed of the same material as the housing cover 120, that is, aluminum alloy, so as to have the same thermal expansion coefficient. This is because the exhaust gas can leak between the housing cover 120 and the locking cap 170 when the housing cover 120 and the locking cap 170 are formed of different materials and thus have different thermal expansion coefficients.

FIGS. 11 and 12 are diagrams illustrating the states where the EGR cooler is coupled to and decoupled from the bypass valve for a vehicle according to the embodiment of the invention.

The process of recirculating the exhaust gas using the bypass valve for a vehicle 100 according to the embodiment of the invention will be described with reference to FIGS. 11 and 12.

When the driving mechanism 140 acts with the negative pressure of the engine, the tappet 142 moves to rotate the rotation plate 158, the shaft 150 rotates with the rotation of the rotation plate 158 to cause the flap 130 to swing.

At this time, the flap 130 selectively opens one of the first exhaust port 112 and the second exhaust port 113. For example, when the first exhaust port 112 is opened, the exhaust gas is discharged to the cooling flow channel 210 of the EGR cooler 200. When the second exhaust port 113 is opened, the exhaust gas is discharged to the bypass flow channel 220 of the EGR cooler 200.

That is, the exhaust gas is discharged to the cooling flow channel 210 or the bypass flow channel 220 of the EGR cooler 200 depending on the temperature, whereby the temperature of the exhaust gas recirculated to the intake manifold can be kept constant always.

In FIG. 12, reference numerals 230 and 240 represent an introduction port 230 for introducing a coolant for cooling the exhaust gas transferred along the cooling flow channel 210 of the EGR cooler 200 and a discharge port 240 for discharging the coolant, respectively.

While the exemplary embodiments of the invention have been described above, the embodiments are only examples of the invention, and it will be understood by those skilled in the art that the invention can be modified in various forms without departing from the technical spirit of the invention. Therefore, the scope of the invention should be determined on the basis of the descriptions in the appended claims, not any specific embodiment, and all equivalents thereof should belong to the scope of the invention.

## Claims

1. A bypass valve (100) for a vehicle, comprising:
an intake port (111) formed in a surface of a valve housing (110);
a first exhaust port (112) formed in another surface of the valve housing (110) and connected to a cooling flow channel (210) of an EGR cooler (200);
a second exhaust port (113) formed to be adjacent to the first exhaust port (1122) and connected to a bypass flow channel (220) of the EGR cooler (200);
a gas transfer channel (114) formed in the valve housing (110) and having a junction section (115) formed in the middle so as to connect the intake port (111) and the first and second exhaust ports (112, 113);
a housing cover (120) coupled to an opened side of the junction section (115);
a shaft (150) of which both ends are coupled to the valve housing (110) and the housing cover (120) and which is rotatably disposed in the junction section (115);
a flap (130) coupled to the middle of the shaft (150) so as to selectively open and close the first and second exhaust ports (112, 113); and
a driving mechanism (140) disposed on one side of the valve housing (110) so as to cause the flap (130) to swing,
wherein the swing angle of the flap (130) is in the range of 60° to 70°,
wherein the shaft (150) is disposed in the valve housing (110) and the housing cover (120) so as to rotate with carbon bushes (152) coupled to both ends thereof,
wherein an insertion hole (127) into which the end of the shaft (150) is inserted is formed in the housing cover (120) and a locking cap (170) for preventing the separation of the shaft (150) is disposed in the insertion hole (127),
wherein the locking cap (170) is inserted into the insertion hole (127) and is fixed by punching,
wherein the locking cap (170) is formed of a material has the same thermal expansion coefficient as the housing cover.

2. The bypass valve (100) for a vehicle according to claim 1, wherein the shaft (150) is disposed in the valve housing (110) and the housing cover (120) so as to rotate with dry bearings (154) coupled to both ends thereof.

3. The bypass valve (100) for a vehicle according to claim 1, wherein the shaft (150) is disposed in the valve housing (110) and the housing cover (120) so as to rotate with a carbon bush (152) coupled to an end thereof and a dry bearing (154) coupled to the other end.

4. The bypass valve (100) for a vehicle according to any one of claims 1 to 3, wherein insertion grooves (116, 126) into which the carbon bushes (152) or the dry bearings (154) are inserted are formed in the valve housing (110) and the housing cover (120), and stopper rings (156) for preventing the separation of the carbon bushes (152) or the dry bearings (154) are disposed at both ends of the shaft (150).

5. The bypass valve (100) for a vehicle according to claim 4, wherein the stopper ring (156) is a doughnut-shaped plug or a C-shaped snap ring.

6. The bypass valve (100) for a vehicle according to any one of claims 1 to 3, wherein the end of the shaft (150) is connected to the driving mechanism (140) through the valve housing (110) and a dust cap (160) is disposed in the through hole (117) of the valve housing (110) through which the end of the shaft (150) is inserted.

7. The bypass valve (100) for a vehicle according to any one of claims 1 to 3, wherein the housing cover (120) is fixed to the valve housing (110) with a fixing screw (180) and a screw fixing agent is applied to the fixing screw (180).

8. The bypass valve (100) for a vehicle according to any one of claims 1 to 3, wherein a positioning hole (18, 128) or a positioning pin is formed in the coupling surfaces of the valve housing (110) and the housing cover (120).

## Patentansprüche

1. Bypassventil (100) für ein Fahrzeug, umfassend:
eine in einer Fläche eines Ventilgehäuses (110) ausgebildete Einlassöffnung (111);
eine erste Abgasöffnung (112), die in einer anderen Fläche des Ventilgehäuses (110) ausgebildet und mit einem Kühlströmungskanal (210) eines AGR-Kühlers (200) verbunden ist;
eine zweite Abgasöffnung (113), die benachbart zur ersten Abgasöffnung (112) ausgebildet ist und mit einem Bypass-Strömungskanal (220) des AGR-Kühlers (200) verbunden ist;
einen Gastransferkanal (114), der in dem Ventilgehäuse (110) ausgebildet ist und einen in der Mitte davon ausgebildeten Verbindungsabschnitt (115) aufweist, um die Einlassöffnung (111) mit der ersten und der zweiten Abgasöffnung (112, 113) zu verbinden;
eine mit einer geöffneten Seite des Verbindungsabschnitts (115) verbundene Gehäuseabdeckung (120);
eine Welle (150), deren Enden mit dem Ventilgehäuse (110) und der Gehäuseabdeckung (120) verbunden sind und die in dem Verbindungsabschnitt (115) drehbar angeordnet ist;
eine mit der Mitte der Welle (150) verbundene Klappe (130) zum selektiven Öffnen und Schließen der ersten und zweiten Abgasöffnungen (112, 113); und
einen auf einer Seite des Ventilgehäuses (110) angeordneten Antriebsmechanismus (140) zum Schwenken der Klappe (130),
wobei der Schwenkwinkel der Klappe (130) im Bereich von 60° bis 70° liegt,
wobei die Welle (150) in dem Ventilgehäuse (110) und der Gehäuseabdeckung (120) derart angeordnet ist, dass sie sich mit Carbon-Buchsen (152) dreht, die mit ihren beiden Enden verbunden sind,
wobei in der Gehäuseabdeckung (120) ein Einsteckloch (127) ausgebildet ist, in welches das Ende der Welle (150) eingesetzt ist, und eine Verriegelungskappe (170) zur Verhinderung der Entkopplung der Welle (150) im Einsteckloch angeordnet ist (127),
wobei die Verriegelungskappe (170) in das Einführloch (127) eingesetzt und durch Stanzen fixiert ist,
wobei die Verriegelungskappe (170) aus einem Material gebildet ist, das den gleichen Wärmeausdehnungskoeffizienten wie die Gehäuseabdeckung aufweist.

2. Bypassventil (100) für ein Fahrzeug gemäß Anspruch 1, wobei die Welle (150) im Ventilgehäuse (110) und in der Gehäuseabdeckung (120) so angeordnet ist, dass sie sich mit Trockenlagern (154) dreht, die mit beiden Enden davon verbundenen sind.

3. Bypassventil (100) für ein Fahrzeug gemäß Anspruch 1,wobei die Welle (150) im Ventilgehäuse (110) und in der Gehäuseabdeckung (120) so angeordnet ist, dass sie sich mit einer mit dem einen Ende verbundenen Carbon-Buchse (152) und einem mit dem anderen Ende verbundenen Trockenlager (154) dreht.

4. Bypassventil (100) für ein Fahrzeug gemäß einem der Ansprüche 1 bis 3, wobei im Ventilgehäuse (110) und der Gehäuseabdeckung (120) Einstecknuten (116, 126) ausgebildet sind, in welche die Carbon-Buchsen (152) oder die Trockenlager (154) eingesetzt sind, und wobei an beiden Enden der Welle (150) Anschlagringe (156) zur Verhinderung der Entkopplung der Carbon-Buchsen (152) oder der Trockenlager (154) angeordnet sind.

5. Bypassventil (100) für ein Fahrzeug gemäß Anspruch 4, wobei der Anschlagring (156) ein ringförmiger Stecker oder ein C-förmiger Sicherungsring ist.

6. Bypassventil (100) für ein Fahrzeug gemäß einem der Ansprüche 1 bis 3, wobei das Ende der Welle (150) durch das Ventilgehäuse (110) mit dem Antriebsmechanismus (140) verbunden ist, und wobei eine Staubkappe (160) in dem Durchgangsloch (117) des Ventilgehäuses (110) angeordnet ist, durch welches das Ende der Welle (150) eingesetzt ist.

7. Bypassventil (100) für ein Fahrzeug gemäß einem der Ansprüche 1 bis 3, wobei die Gehäuseabdeckung (120) an dem Ventilgehäuse (110) mit einer Befestigungsschraube (180) befestigt ist und wobei ein Schraubenfixiermittel auf die Befestigungsschraube (180) aufgetragen ist.

8. Bypassventil (100) für ein Fahrzeug gemäß einem der Ansprüche 1 bis 3, wobei in den Verbindungsflächen des Ventilgehäuses (110) und der Gehäuseabdeckung (120) ein Positionierloch (18, 128) oder ein Positionierstift ausgebildet ist.

## Revendications

1. Soupape de dérivation (100) pour un véhicule, comprenant :
un orifice d'admission (111) qui est formé dans une surface d'un compartiment de soupapes (110) ;
un premier orifice d'échappement (112) qui est formé dans une autre surface du compartiment de soupapes (110) et qui est connecté à un canal d'écoulement de refroidissement (210) d'un dispositif de refroidissement EGR (200) ;
un second orifice d'échappement (113) qui est formé de manière à être adjacent au premier orifice d'échappement (112) et qui est connecté à un canal d'écoulement de dérivation (220) du dispositif de refroidissement EGR (200) ;
un canal de transfert de gaz (114) qui est formé dans le compartiment de soupapes (110) et qui comporte une section de jonction (115) qui est formée dans sa partie centrale de manière à connecter l'orifice d'admission (111) et les premier et second orifices d'échappement (112, 113) ;
un couvercle de compartiment (120) qui est couplé à un côté ouvert de la section de jonction (115) ;
un arbre (150) dont les deux extrémités sont couplées au compartiment de soupapes (110) et au couvercle de compartiment (120) et qui est disposé à rotation dans la section de jonction (115) ;
un volet (130) qui est couplé à la partie centrale de l'arbre (150) de manière ouvrir et fermer de façon sélective les premier et second orifices d'échappement (112, 113) ; et
un mécanisme d'entraînement (140) qui est disposé sur un côté du compartiment de soupapes (110) de manière à forcer le volet (130) à pivoter, dans laquelle : l'angle de pivotement du volet (130) est dans la plage de 60° à 70°,
dans laquelle : l'arbre (150) est disposé dans le compartiment de soupapes (110) et le couvercle de compartiment (120) de manière à tourner avec des douilles en carbone (152) qui sont couplées à ses deux extrémités,
dans laquelle : un trou d'insertion (127) à l'intérieur duquel l'extrémité de l'arbre (150) est insérée est formé dans le couvercle de compartiment (120) et un capuchon de blocage (170) pour empêcher la séparation de l'arbre (150) est disposé dans le trou d'insertion (127),
dans laquelle : le capuchon de blocage (170) est inséré à l'intérieur du trou d'insertion (127) et est fixé par poinçonnage,
dans laquelle : le capuchon de blocage (170) est formé en un matériau qui présente le même coefficient de dilatation thermique que le couvercle de compartiment.

2. Soupape de dérivation (100) pour un véhicule selon la revendication 1, dans laquelle l'arbre (150) est disposé dans le compartiment de soupapes (110) et le couvercle de compartiment (120) de manière à tourner avec des paliers secs (154) qui sont couplés à ses deux extrémités.

3. Soupape de dérivation (100) pour un véhicule selon la revendication 1, dans laquelle l'arbre (150) est disposé dans le compartiment de soupapes (110) et le couvercle de compartiment (120) de manière à tourner avec une douille en carbone (152) qui est couplée à l'une de ses extrémités et avec un palier sec (154) qui est couplé à son autre extrémité.

4. Soupape de dérivation (100) pour un véhicule selon l'une quelconque des revendications 1 à 3, dans laquelle des gorges d'insertion (116, 126) à l'intérieur desquelles les douilles en carbone (152) ou les paliers secs (154) sont insérés sont formées dans le compartiment de soupapes (110) et le couvercle de compartiment (110), et des bagues de butée (156) pour empêcher la séparation des douilles en carbone (152) ou des paliers secs (154) sont disposées au niveau des deux extrémités de l'arbre (150).

5. Soupape de dérivation (100) pour un véhicule selon la revendication 4, dans laquelle la bague de butée (156) est un moyen d'obturation en forme de beignet ou une bague de retenue élastique/un circlip en forme de C.

6. Soupape de dérivation (100) pour un véhicule selon l'une quelconque des revendications 1 à 3, dans laquelle l'extrémité de l'arbre (150) est connectée au mécanisme d'entraînement (140) par l'intermédiaire du compartiment de soupapes (110) et un capuchon anti-poussière (160) est disposé dans le trou traversant (117) du compartiment de soupapes (110) au travers duquel l'extrémité de l'arbre (150) est insérée.

7. Soupape de dérivation (100) pour un véhicule selon l'une quelconque des revendications 1 à 3, dans laquelle le couvercle de compartiment (120) est fixé au compartiment de soupapes (110) à l'aide d'une vis de fixation (180) et un agent de fixation de vis est appliqué sur la vis de fixation (180).

8. Soupape de dérivation (100) pour un véhicule selon l'une quelconque des revendications 1 à 3, dans laquelle un trou de positionnement (18, 128) ou une broche de positionnement est formée dans les surfaces de couplage du compartiment de soupapes (110) et du couvercle de compartiment (120).
